# EUROPÄISCHE PATENTSCHRIFT

(11) **EP 4 437 901 B1**
(45) Veröffentlichungstag und Bekanntmachung des Hinweises auf die Patenterteilung: **01.04.2026**
(21) Anmeldenummer: 24165092.8
(22) Anmeldetag: 21.03.2024
(51) Int. Cl.: A44B 19/34, A44B 19/08

(54) **REISSVERSCHLUSS**
ZIPPER
FERMETURE À GLISSIÈRE

(30) Priorität: 23.03.2023 DE 102023107295; 23.03.2023 DE 202023101458 U
(43) Veröffentlichungstag der Anmeldung: 02.10.2024
(73) Patentinhaber: Opti Group GmbH, 26817 Rhauderfehn (DE)
(72) Erfinder: Waden, Udo, 26842 Ostrhauderfehn (DE); Ewen, Dirk, 26817 Rhauderfehn (DE); Ammermann, Marco, 26842 Ostrhauderfehn (DE)
(74) Vertreter: Jabbusch, Matthias

(56) Entgegenhaltungen:
- EP-A1- 1 449 451
- WO-A1-2011/027458
- WO-A1-2011/030442
- CN-A- 112 107 086
- DE-A1- 1 610 391
- DE-A1- 2 209 976

## Beschreibung

Die Erfindung betrifft einen Reißverschluss aufweisend ein Paar parallel zueinander angeordneter Tragbänder und jeweils in einer Reihe an den Tragbändern befestigter Kuppelglieder, wobei die Reihen der Kuppelglieder einander gegenüberliegen und ineinandergreifend die beiden Tragbänder miteinander verbinden, jedes Tragband aus zwei Tragbandabschnitten gebildet ist, die in Lagen übereinandergelegt sind, die Kuppelglieder jeweils an einem ersten Tragbandabschnitt anliegen und ein zweiter Tragbandabschnitt an der von den Kuppelgliedern abgewandten Seite des ersten Tragbandabschnittes angeordnet ist und der erste Tragbandabschnitt und der zweite Tragbandabschnitt beider Tragbänder an einem jeweils dem anderen Tragband zugewandten Tragbandbereich umgebogen und mit einander verbunden sind, sowie einen Schieber, der entlang der Reihen durch die Kuppelglieder geführt ist, wobei der Schieber dafür ausgelegt ist, dass eine Bewegung des Schiebers in eine erste Richtung die Kuppelglieder der Tragbänder ineinandergreifend verbindet und in eine zweite, entgegengesetzte Richtung voneinander löst, wobei zumindest die ersten Tragbandabschnitte der Tragbänder einen versteiften Bereich aufweisen, der sich bis in den umgebogenen Tragbandbereich erstreckt und wobei die ein Paar ausbildenden Tragbänder bei ineinandergreifenden Kuppelgliedern mit den umgebogenen Tragbandbereichen aneinanderstoßen.

Verborgene oder nahtverdeckte Reißverschlüsse finden unter anderem Anwendung, um Stoffbezüge von Gegenständen, wie Möbeln oder Sitzbezüge Kraftfahrzeugen, so an diesen anzubringen, dass nur eine Naht bzw. eine einer Naht ähnliche Einkerbung des Stoffbezugs sichtbar ist. Aufgrund dessen, dass die betreffenden Stoffbezüge zumeist nicht dafür vorgesehen und ausgelegt sind wieder abgenommen zu werden und dauerhaft oder für einen längeren Zeitraum in ihrer bestimmungsgemäßen Position verbleiben, sind diese in der Regel äußerst stramm aufgezogen, so dass auf den verdeckten Reißverschluss relativ große Zugkräfte wirken. Diese Zugkräfte können dann dazu führen, dass auch der eigentlich als Naht verdeckte Reißverschluss bei normalem Gebrauch sichtbar ist.

Um dies zu vermeiden, wird gemäß der EP 1 449 451 A1 vorgeschlagen in Tragbänder gegenüber Schussfäden dickere Kettfäden einzuweben, die die bestimmungsgemäß aneinanderstoßenden Tragbänder an deren Stoßbereichen stabilisieren und versteifen. Die WO 2011/027458 A1 offenbart einen nahtverdeckten Reißverschluss, bei dem die Tragbänder verschiedene Websektionen mit einfach und mehrfach gewebten Bereichen aufweisen sollen, wodurch die nötige Versteifung der bestimmungsgemäß aneinanderstoßenden Randbereiche erreicht werden soll.

Ein anderer Ansatz wird in der WO 2011/030442 A1 gelehrt. Bei dieser wird eine Versteifung der Tragbänder eines Reißverschlusses, insbesondere an deren einander zugewandten Stoßkanten, dadurch erreicht, dass die Tragbänder ein eine Tasche ausbildendes Hohlgewebe darstellen, in die ein Filmkörper, d. h. ein dünnes Plättchen aus Metall oder Kunststoff eingewebt werden soll. Nach DE 22 09 976 A1 soll eine Versteifung der Tragbänder durch eine auf umgeklappte Tragbandlappen aufkaschierte Kunststoffschicht erreicht werden.

Gemäß der DE 16 10 391 A1 werden zur Versteifung der Tragbänder aufkaschierte, schmelzbare Folienstreifen vorgeschlagen. Diese sollen auf den umgeschlagenen Tragbandteil durch Aufwalzen unter Wärmeanwendung befestigt werden.

Die CN 112 107 086 A offenbart schließlich einen nahtverdeckten Reißverschluss, bei dem in das Gewebe der Tragbänder aneinander anliegende Schmelzfäden eingearbeitet sind. Diese sollen entweder durch Schmelzen miteinander verbunden werden oder mit nicht geschmolzenen, benachbarten Fäden verbunden werden. Die Schmelzfäden bilden somit einerseits eine versteifte Kunststoffplatte aus und sollen andererseits nicht schmelzbare benachbarte Fäden mit der Kunststoffplatte verbinden können.

Aufgabe der Erfindung ist es daher, einen solchen verborgenen oder nahtverdeckten Reißverschluss bereitzustellen, der dahingehend weiterentwickelt ist, dass dieser auch unter entsprechender Zugbelastung vollständig durch den Stoffbezug verdeckt ist.

Die Lösung dieser Aufgabe erfolgt mit einem Reißverschluss gemäß den Merkmalen des Anspruchs 1. Weiterbildungen und vorteilhafte Ausgestaltungen des Reißverschlusses sind in den nachgeordneten Ansprüchen angegeben.

Der Reißverschluss weist ein Paar parallel zueinander angeordneter Tragbänder und jeweils in einer Reihe an den Tragbändern befestigter Kuppelglieder auf, wobei die Reihen der Kuppelglieder einander gegenüberliegen und ineinandergreifend die beiden Tragbänder miteinander verbinden, jedes Tragband aus zwei Tragbandabschnitten gebildet ist, die in Lagen übereinander gelegt sind, die Kuppelglieder jeweils an einem ersten Tragbandabschnitt anliegen und ein zweiter Tragbandabschnitt an der von den Kuppelgliedern abgewandten Seite des ersten Tragbandabschnittes angeordnet ist und der erste Tragbandabschnitt und der zweite Tragbandabschnitt beider Tragbänder an einem jeweils dem anderen Tragband zugewandten Tragbandbereich umgebogen und mit einander verbunden sind, sowie einen Schieber, der entlang der Reihen durch die Kuppelglieder, insbesondere die Kuppelglieder beider Tragbänder, geführt ist, wobei der Schieber dafür ausgelegt ist, dass eine Bewegung des Schiebers in eine erste Richtung die Kuppelglieder der Tragbänder ineinandergreifend verbindet und in eine zweite, entgegengesetzte Richtung voneinander löst, wobei zumindest die ersten Tragbandabschnitte der Tragbänder einen versteiften Bereich aufweisen, der sich bis in den umgebogenen Tragbandbereich erstreckt und wobei die ein Paar ausbildenden Tragbänder bei ineinandergreifenden Kuppelgliedern mit den umgebogenen Tragbandbereichen aneinanderstoßen, wobei die Tragbänder in dem versteiften Bereich Kettfäden aus Zweikomponentengarn aufweisen. Erfindungsgemäß ist das Zweikomponentengarn aus mit einer Schmelzschicht ummanteltem Kernzwirn gebildet.

Die zusätzliche Versteifung bewirkt, dass die beiden Tragbänder und somit auch die mit den zweiten Tragbandabschnitten der Tragbänder bestimmungsgemäß jeweils zu verbindenden Seiten des Sitz- oder Stoffbezugs gegeneinandergedrückt werden und somit auch unter entgegenwirkender Zugbelastung zusammenstoßen. Am Stoß der Stoffbezüge ist dann nur die Nahtnachbildung zu sehen.

Die Tragbänder sind in weiterer Ausgestaltung aus gewebtem Material mit parallel der Reihen Kuppelglieder orientierten Kettfäden gebildet. Die Gewebe bauen dementsprechend auf bekannten Strukturen auf, so dass deren Herstellung verhältnismäßig einfach in bekannte Herstellungsverfahren implementiert werden kann.

Die Tragbänder weisen in dem versteiften Bereich Kettfäden aus Zweikomponentengarn, insbesondere Polyester-Zweikomponentengarn, auf. Diese Zweikomponentengarne sind aus einem mit einer Schmelzschicht ummantelten Kernzwirn gebildet. Der Kernzwirn des Zweikomponentengarns bildet dann zusammen mit wenigstens einem Schussfaden und sich an den Bereich mit Kettfäden aus dem Zweikomponentengarn anschließenden weiteren Kettfäden das Gewebe aus, welches die Grundstruktur der Tragbänder ausbildet. Insbesondere der jeweils zweite Tragbandabschnitt der Tragbänder ist jeweils aus nicht ummantelten Kettfäden gebildet. Zudem kann bevorzugt ein von dem umgebogenen Tragbandbereich abgewandter Endbereich des ersten Tragbandabschnitts aus nicht ummantelten Kettfäden gebildet sein.

Der versteifte Bereich weist in weiterer Ausgestaltung wenigstens fünf Kettfäden aus Zweikomponentengarn, insbesondere zwischen 5 und 9 Kettfäden, insbesondere zwischen 6 und 8 Kettfäden, auf. Diese Kettfäden aus dem Zweikomponentengarn sind bevorzugt nebeneinanderliegend in dem Gewebe der Tragbänder des Reißverschlusses angeordnet und bewirken eine ausreichende Versteifung der Tragbänder, die den bestimmungsgemäß auf sie einwirkenden Zugkräften entgegenwirken.

Jedes der Tragbänder weist dabei nach einer Weiterbildung nur einen einzigen versteiften Bereich aus Zweikomponentengarn auf. Dieser ist bevorzugt an eine bestimmungsgemäße Verwendung angepasst, so dass der Reißverschluss dadurch höchsten Anforderungen an Flammhemmung und Feuerschutz genügt.

Erreicht wird die Versteifung schließlich, indem das Zweikomponentengarn in dem versteiften Bereich eine nach Erwärmung ausgehärtete Kunststoffschicht, insbesondere ein Duroplast oder ein Thermoplast, mit eingeschlossenem Kernzwirn ausbildet. Das Duroplast bildet dann eine dauerhafte, irreversible Versteifung des Bereichs in den das Zweikomponentengarn eingebracht ist, auch wenn auf diesen vorgenannte Zugkräfte, beispielsweise bei Sitzbezügen oder Möbeln, wirken. Neben einem Duroplast ausbildenden Zweikomponentengarn kann alternativ auch solches Zweikomponentengarn verwendet werden, das nach Erwärmung ein Thermoplast ausbildet, wobei Anwendungstemperaturen des in Gebrauch befindlichen Reißverschlusses dann unterhalb einer Schmelztemperatur des Thermoplasten liegen müssen, um sicherzustellen, dass der nach Erwärmung ausgehärtete Reißverschluss seine Form dauerhaft beibehält. Kennzeichnend sowohl des Duroplast als auch des Thermoplast ist die durchgehende, versteifende Kunststoffschicht mit eingeschlossenem Kernzwirn, die zumindest abschnittsweise das Tragband ausbildet.

Die Reihe aus Kuppelgliedern eines Tragbandes kann weiterhin eine Wendel ausbilden und sich der versteifte Bereich eines Tragbandes bei ineinandergreifenden Kuppelgliedern über wenigstens die Hälfte einer durch die beiden Wendel der Reihen der Kuppelglieder gebildeten Wendelbreite des Reißverschlusses erstrecken. Die versteifende Kunststoffschicht ist dabei so zu den Kuppelgliedern ausgerichtet, dass sich die Kunststoffschichten der einen Reißverschluss ausbildenden Tragbänder über die gesamte Länge und Breite der Wendelbreite oder Spiralbreite oder auch Verzahnung erstrecken und im Bereich der Wendelbreite bei ineinandergreifenden Kuppelgliedern aneinanderstoßen. Die durch die Kunststoffschichten gebildeten versteiften Bereiche können dabei bei ineinandergreifenden Kuppelgliedern auch außermittig zusammenstoßen, so dass der versteifte Bereich des einen Tragbandes die Kuppelglieder des anderen Tragbandes überlappt.

Um eine zusätzliche oder höhere Versteifung zu erreichen, ist nach einer nächsten Weiterbildung vorgesehen, dass die Tragbänder einen Schussfaden aus Zweikomponentengarn, insbesondere Polyester-Zweikomponentengarn, aufweisen. Der quer zu den Kettfäden verlaufende Schussfaden erstreckt sich über die gesamte Breite des Tragbandes, insbesondere die gesamte Breite des Tragbandes aus erstem und zweiten Tragbandabschnitt mit dem diese verbindenden umgebogenen Tragbandbereich. Der Bereich in dem sich Schussfaden und Kettfäden kreuzen ist gemäß dieser Ausführung dann stärker versteift als die nur mit dem Schussfaden verstärkten Bereiche.

Indem auch außerhalb des versteiften Bereichs weitere Kettfäden aus Zweikomponentengarn eingearbeitet sind, können, wenn eine Anwendung dies erfordert, auch unterschiedlich stark versteifte Bereiche geschaffen werden.

Um eine möglichst einfache Fertigung der Tragbänder zu gewährleisten, ist nach einer nächsten Weiterbildung vorgesehen, dass die Tragbänder aus einlagigem Gewebe gebildet sind. Spezielle Anwendungen, die eine Differenzierung der Tragbänder in unterschiedlich versteifte Bereiche erfordern, können alternativ Tragbänder aus mehrlagigem Gewebe aufweisen, wobei das Zweikomponentengarn in wenigstens eine Lage des Gewebes eingearbeitet ist, insbesondere in wenigstens zwei Lagen des Gewebes eingearbeitet ist, insbesondere in allen Lagen des Gewebes eingearbeitet ist. Die Kettfäden aus Zweikomponentengarn verteilen sich dann entsprechend einer jeweiligen Anforderung, wobei durch mehrlagig angeordnete Kettfäden aus Zweikomponentengarn, zwischen denen eine gemeinsame Kunststoffschicht ausgeformt wird, insgesamt höhere Steifigkeiten erreicht werden können.

Weiter betrifft die Erfindung auch einen Sitzbezug für einen Kraftfahrzeugsitz, wobei der Sitzbezug dazu vorgesehen und ausgelegt ist, im Produktionsverlauf von oben auf den bis dahin bezugsfreien Kraftfahrzeugsitz aufgezogen zu werden und wobei der Kraftfahrzeugsitz mindestens einen im Wesentlichen vertikal verlaufenden Reißverschluss aufweist. Dieser Sitzbezug zeichnet sich erfindungsgemäß dadurch aus, dass der Reißverschluss entsprechend den vorgenannten Merkmalen ausgebildet ist. Der Reißverschluss kann dabei bestimmungsgemäß eine Naht nachbilden und ist somit vollständig verdeckt.

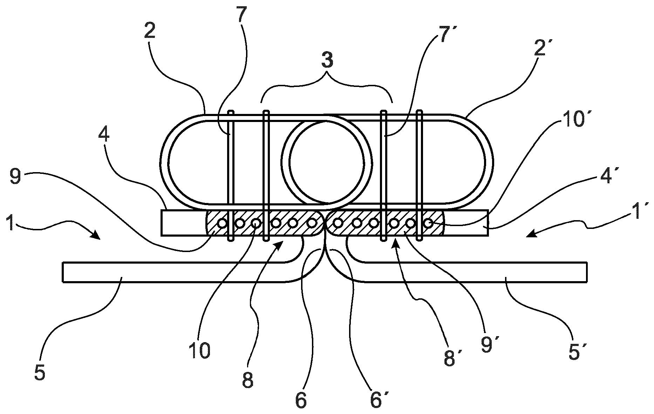

Ein Ausführungsbeispiel der Erfindung, aus dem sich weitere erfindungswesentliche Merkmal ergeben können, ist in der Zeichnung dargestellt.

Die einzige Figur der Zeichnung zeigt einen Querschnitt durch einen erfindungsgemäßen Reißverschluss mit zwei paarweise angeordneten Tragbändern 1, 1' sowie jeweils an den Tragbändern 1, 1' gehaltenen Reihen Kuppelgliedern 2, 2', die ineinandergreifend miteinander verbunden sind und eine Wendelbreite 3 des Reißverschlusses definieren. Die Tragbänder 1, 1' weisen jeweils einen ersten Tragbandabschnitt 4, 4' und einen zweiten Tragbandabschnitt 5, 5', die je Tragband 1, 1' aneinander anliegen und über einen jeweils umgebogenen Tragbandbereich 6, 6' miteinander verbunden sind. Die Tragbänder 1, 1' sind weiter jeweils mit dem ersten Tragbandabschnitt 4, 4' mit den Kuppelgliedern 2, 2' verbunden, indem die Kuppelglieder 2, 2' und ersten Tragbandabschnitte 4, 4' mittels Nähfäden 7, 7' verbunden sind. Die zweiten Tragbandabschnitte 5, 5' dienen bestimmungsgemäß jeweils der Verbindung mit einem in der Zeichnung nicht dargestellten Sitzbezug.

Die Tragbänder 1, 1' weisen jeweils einen versteiften Bereich 8, 8' auf, der sich über einen Teilbereich des ersten Tragbandabschnitts 4, 4' bis zu dem umgebogenen Tragbandbereich 6, 6' erstreckt. Die versteiften Bereiche 8, 8' sind jeweils durch eine Kunststoffschicht 9, 9' gebildet, die aus Schmelzschichten von in dem versteiften Bereich 8, 8' eingearbeiteten Zweikomponentengarnen gebildet sind. Innerhalb der Kunststoffschichten 9, 9' sind noch jeweils entsprechend der Anzahl Zweikomponentengarne Kernzwirne 10, 10' dieser ersichtlich. Die versteiften Bereiche 8, 8' bewirken, dass die Tragbänder 1, 1' jeweils in den als Wendelbreite 3 definierten Bereich der Kuppelglieder 2, 2' ragen und mit den umgebogenen Tragbandbereichen 6, 6' aneinanderstoßen.

## Patentansprüche

1. Reißverschluss aufweisend ein Paar parallel zueinander angeordneter Tragbänder (1, 1') und jeweils in einer Reihe an den Tragbändern (1, 1') befestigter Kuppelglieder (2, 2'), wobei die Reihen der Kuppelglieder (2, 2') einander gegenüberliegen und ineinandergreifend die beiden Tragbänder (1, 1') miteinander verbinden, jedes Tragband (1, 1') aus zwei Tragbandabschnitten (4, 4', 5, 5') gebildet ist, die in Lagen übereinandergelegt sind, die Kuppelglieder (2, 2') jeweils an einem ersten Tragbandabschnitt (4, 4') anliegen und ein zweiter Tragbandabschnitt (5, 5') an der von den Kuppelgliedern (2, 2') abgewandten Seite des ersten Tragbandabschnittes (4, 4') angeordnet ist, der erste Tragbandabschnitt (4, 4') und der zweite Tragbandabschnitt (5, 5') beider Tragbänder (1, 1') an einem jeweils dem anderen Tragband (1, 1') zugewandten Tragbandbereich (6, 6') umgebogen und miteinander verbunden sind, sowie einen Schieber, der entlang der Reihen durch die Kuppelglieder (2, 2') geführt ist, wobei der Schieber dafür ausgelegt ist, dass eine Bewegung des Schiebers in eine erste Richtung die Kuppelglieder (2, 2') der Tragbänder (1, 1') ineinandergreifend verbindet und in eine zweite, entgegengesetzte Richtung voneinander löst,
wobei zumindest die ersten Tragbandabschnitte (4, 4') der Tragbänder (1, 1') einen versteiften Bereich (8, 8') aufweisen, der sich bis in den umgebogenen Tragbandbereich (6) erstreckt, und
wobei die ein Paar ausbildenden Tragbänder (1, 1') bei ineinandergreifenden Kuppelgliedern (2, 2') mit den umgebogenen Tragbandbereichen (6, 6') aneinanderstoßen,
und wobei die Tragbänder (1, 1') in dem versteiften Bereich Kettfäden aus Zweikomponentengarn aufweisen, **dadurch gekennzeichnet, dass** das Zweikomponentengarn aus mit einer Schmelzschicht ummanteltem Kernzwirn gebildet ist**.**

2. Reißverschluss nach Anspruch 1, **dadurch gekennzeichnet, dass** die Tragbänder (1, 1') aus gewebtem Material mit parallel der Reihen Kuppelglieder (2, 2') orientierten Kettfäden gebildet sind.

3. Reißverschluss nach einem der Ansprüche 1 oder 2, **dadurch gekennzeichnet, dass** das Zweikomponentengarn ein Polyester-Zweikomponentengarn ist.

4. Reißverschluss nach einem der Ansprüche 1 bis 3, **dadurch gekennzeichnet, dass** der versteifte Bereich (8, 8') wenigstens fünf Kettfäden aus dem Zweikomponentengarn aufweist, insbesondere zwischen 5 und 9 Kettfäden aufweist, insbesondere zwischen 6 und 8 Kettfäden aufweist.

5. Reißverschluss nach einem der Ansprüche 1 bis 4, **dadurch gekennzeichnet, dass** die Tragbänder (1, 1') jeweils einen einzigen versteiften Bereich (8, 8') ausbilden.

6. Reißverschluss nach einem der Ansprüche 1 bis 5, **dadurch gekennzeichnet, dass** das Zweikomponentengarn in dem versteiften Bereich (8, 8') eine nach Erwärmung ausgehärtete Kunststoffschicht (9, 9'), insbesondere ein Duroplast oder ein Thermoplast, mit dem eingeschlossenen Kernzwirn (10, 10') des Zweikomponentengarns ausbildet.

7. Reißverschluss nach einem der Ansprüche 1 bis 6, **dadurch gekennzeichnet, dass** die Kuppelglieder (2, 2') eines Tragbandes (1, 1') eine Wendel ausbilden und sich der versteifte Bereich eines Tragbandes (1, 1') bei ineinandergreifenden Kuppelgliedern (2, 2') über wenigstens die Hälfte einer durch die beiden Wendel gebildeten Wendelbreite (3) des Reißverschlusses erstreckt.

8. Reißverschluss nach einem der Ansprüche 1 bis 7, **dadurch gekennzeichnet, dass** die Tragbänder (1, 1') einen Schussfaden aus Zweikomponentengarn, insbesondere Polyester-Zweikomponentengarn, aufweisen.

9. Reißverschluss nach einem der Ansprüche 1 bis 8, **dadurch gekennzeichnet, dass** die Tragbänder (1, 1') aus einlagigem Gewebe gebildet sind.

10. Reißverschluss nach einem der Ansprüche 1 bis 8, **dadurch gekennzeichnet, dass** die Tragbänder (1, 1') aus mehrlagigem Gewebe gebildet sind, wobei das Zweikomponentengarn in wenigstens eine Lage des Gewebes eingearbeitet ist, insbesondere in wenigstens zwei Lagen des Gewebes eingearbeitet ist, insbesondere in allen Lagen des Gewebes eingearbeitet ist.

11. Sitzbezug für einen Kraftfahrzeugsitz, wobei der Sitzbezug dazu vorgesehen und ausgelegt ist, im Produktionsverlauf von oben auf den bis dahin bezugsfreien Kraftfahrzeugsitz aufgezogen zu werden und wobei der Sitzbezug mindestens einen im Wesentlichen vertikal verlaufenden Reißverschluss aufweist,
**dadurch gekennzeichnet,**
**dass** der Reißverschluss entsprechend den Merkmalen eines der Ansprüche 1 bis 10 ausgebildet ist.

## Claims

1. A zipper having a pair of carrying strips (1, 1'), which are arranged parallel to one another, and coupling links (2, 2'), which are fastened to the carrying strips (1, 1') in a row in each case, wherein the rows of the coupling links (2, 2') are opposite one another and connect the two carrying strips (1, 1') to each other in an interlocking manner, each carrying strip (1, 1') is formed from two carrying strip sections (4, 4', 5, 5') which are laid on top of each other in layers, the coupling links (2, 2') in each case bear against a first carrying strip section (4, 4'), and a second carrying strip section (5, 5') is arranged on the side of the first carrying strip section (4, 4') facing away from the coupling links (2, 2'), the first carrying strip section (4, 4') and the second carrying strip section (5, 5') of both carrying strips (1, 1') are bent over and connected to one another at a carrying strip region (6, 6') facing the other carrying strip (1, 1') in each case, and also a slider which is guided along the rows by the coupling links (2, 2'), wherein the slider is configured such that a movement of the slider in a first direction connects the coupling links (2, 2') of the carrying strips (1, 1') in an interlocking manner and a movement in a second opposite direction detaches the coupling links from one another,
wherein at least the first carrying strip sections (4, 4') of the carrying strips (1, 1') have a stiffened region (8, 8') which extends as far as into the carrying strip region (6) that is bent over, and
wherein the carrying strips (1, 1'), which form a pair, abut by way of the carrying strip regions (6, 6') that are bent over when the coupling links (2, 2') are interlocked,
and wherein the carrying strips (1, 1') have warp threads made from bicomponent yarn in the stiffened region,
**characterized in that** the bicomponent yarn is formed from core-spun yarn that is coated with a melting layer.

2. The zipper according to Claim 1, **characterized in that** the carrying strips (1, 1') are formed from woven material with warp threads orientated parallel to the rows of coupling links (2, 2').

3. The zipper according to either of Claims 1 and 2, **characterized in that** the bicomponent yarn is a polyester bicomponent yarn.

4. The zipper according to any one of Claims 1 to 3, **characterized in that** the stiffened region (8, 8') has at least five warp threads made from the bicomponent yarn, in particular has between 5 and 9 warp threads, in particular has between 6 and 8 warp threads.

5. The zipper according to any one of Claims 1 to 4, **characterized in that** the the carrying strips (1, 1') form a single stiffened region (8, 8') in each case.

6. The zipper according to any one of Claims 1 to 5, **characterized in that** the bicomponent yarn in the stiffened region (8, 8') forms a plastic layer (9, 9'), particularly a thermoset plastic or a thermoplastic, which hardens after heating, with the enclosed core-spun yarn (10, 10') of the bicomponent yarn.

7. The zipper according to any one of Claims 1 to 6, **characterized in that** the coupling links (2, 2') of a carrying strip (1, 1') form a helix and the stiffened region of a carrying strip (1, 1') extends over at least half of a helix width (3) of the zipper formed by the two helices when the coupling links (2, 2') are interlocked.

8. The zipper according to any one of Claims 1 to 7, **characterized in that** the carrying strips (1, 1') have a weft thread made from bicomponent yarn, in particular polyester bicomponent yarn.

9. The zipper according to any one of Claims 1 to 8, **characterized in that** the carrying strips (1, 1') are formed from a single-layer woven fabric.

10. The zipper according to any one of Claims 1 to 8, **characterized in that** the carrying strips (1, 1') are formed from multilayer woven fabric, wherein the bicomponent yarn is incorporated into at least one layer of the woven fabric, in particular is incorporated into at least two layers of the woven fabric, in particular is incorporated into all layers of the woven fabric.

11. A seat cover for a motor vehicle seat, wherein the seat cover is provided and designed to be pulled from above onto the hitherto cover-free motor vehicle seat in the production process and wherein the seat cover has at least one substantially vertically running zipper, **characterized**
**in that** the zipper is formed according to the features of any one of Claims 1 to 10.

## Revendications

1. Fermeture à glissière comportant une paire de bandes porteuses (1, 1') disposées parallèles l'une à l'autre et des organes d'accouplement (2, 2') fixés respectivement dans un rang sur les bandes porteuses (1, 1'), sachant que les rangs d'organes d'accouplement (2, 2') s'opposent les uns aux autres et sont reliés entre eux mettant en prise les bandes porteuses (1, 1'), chaque bande porteuse (1, 1') est formée de deux sections de bande porteuse (4, 4', 5, 5'), qui sont superposées en couches, les organes d'accouplement (2, 2') s'appliquent respectivement à une première section de bande porteuse (4, 4') et une deuxième section de bande porteuse (5, 5') est disposée sur le côté de la première section de bande porteuse (4, 4'), éloigné des organes d'accouplement (2, 2'), la première section de bande porteuse (4, 4') et la deuxième section de bande porteuse (5, 5') des deux bandes porteuses (1, 1') sont respectivement recourbées sur une zone de bande porteuse (6, 6') tournée vers l'autre bande porteuse (1, 1') et sont reliées entre elles, ainsi qu'un curseur, qui est guidé le long des rangs par les organes d'accouplement (2, 2'), sachant que le curseur est conçu à cet effet pour qu'un mouvement du curseur relie en prise les uns dans les autres dans une première direction les organes d'accouplements (2, 2') des bandes porteuses (1, 1') et les détache les uns des autres dans une deuxième direction opposée,
sachant qu'au moins les premières sections de bande porteuse (4, 4') des bandes porteuses (1, 1') comportent une zone rigidifiée (8, 8'), qui s'étend jusque dans la zone de bande porteuse (6) recourbée, et
sachant que les bandes porteuses (1, 1') formant une paire se touchent avec les zones de bande porteuses (6, 6') recourbées les organes d'accouplement (2, 2') étant en prises les uns dans les autres,
et sachant que les bandes porteuses (1, 1') comportent dans la zone rigidifiée des fils de chaîne d'un filé à deux composants,
**caractérisée en ce que** le filé à deux composants est formé d'un fil retors enveloppé d'une couche fusible.

2. Fermeture à glissière selon la revendication 1, **caractérisée en ce que** les bandes porteuses (1, 1') sont constituées d'un matériau tissé avec des fils de chaîne orientés parallèlement aux rangs d'organes d'accouplement (2, 2').

3. Fermeture à glissière selon l'une quelconque des revendications 1 ou 2, **caractérisée en ce que** le filé à deux composants est un filé à deux composants de polyester.

4. Fermeture à glissière selon l'une quelconque des revendications 1 à 3, **caractérisée en ce que** la zone rigidifiée (8, 8') comporte au moins cinq fils de chaîne en fil à deux composants, comporte en particulier 5 et 9 fils de chaîne, comporte en particulier entre 6 et 8 fils de chaîne.

5. Fermeture à glissière selon l'une quelconque des revendications 1 à 4, **caractérisée en ce que** les bandes porteuses (1, 1') constituent respectivement une zone (8, 8') rigidifiée unique.

6. Fermeture à glissière selon l'une quelconque des revendications 1 à 5, **caractérisée en ce que** le filé à deux composants constitue dans la zone rigidifiée (8, 8') avec le fil retors (10, 10') intégré du fil à deux composants, une couche de matière plastique (9, 9') durcie après réchauffement, en particulier un plastique thermodurcissable ou une matière thermoplastique.

7. Fermeture à glissière selon l'une quelconque des revendications 1 à 6, **caractérisée en ce que** les organes d'accouplement (2, 2') d'une bande porteuse (1, 1') constituent une spire et la zone rigidifiée d'une bande porteuse (1, 1' ) s'étend avec les organes d'accouplement (2, 2') en prise les uns dans les autres sur au moins la moitié d'une largeur de spire (3) de la fermeture à glissière, formée par les deux spires.

8. Fermeture à glissière selon l'une quelconque des revendications 1 à 7, **caractérisée en ce que** les bandes porteuses (1, 1') comportent un fil de trame dans un fil à deux composants, en particulier un filé à deux composants de polyester.

9. Fermeture à glissière selon l'une quelconque des revendications 1 à 8, **caractérisée en ce que** les bandes porteuses (1, 1') sont formées d'un tissu monocouche.

10. Fermeture à glissière selon l'une quelconque des revendications 1 à 8, **caractérisée en ce que** les bandes porteuses (1, 1') sont formées d'un tissu multicouche, sachant que le filé à deux composants est intégré dans au moins une couche du tissu, est intégré en particulier dans au moins deux couches du tissu, est intégré dans toutes les couches de tissu.

11. Revêtement de siège pour un siège de véhicule automobile, sachant que le revêtement de siège est prévu et conçu pour être fixé en cours de production depuis le haut sur le siège de véhicule automobile sans revêtement jusque-là et sachant que le revêtement de siège comporte au moins une fermeture à glissière passant pour l'essentiel verticalement,
**caractérisé en ce que**
la fermeture à glissière est constituée correspondant aux caractéristiques d'une quelconque des revendications 1 à 10.
